# EUROPEAN PATENT APPLICATION

(11) **EP 4 535 263 A1**
(43) Date of publication of application: **09.04.2025**
(21) Application number: 24204165.5
(22) Date of filing: 02.10.2024
(51) Int. Cl.: G06Q 20/18, G06Q 20/20, G07G 1/00

(54) **REPORTING SYSTEM, DEVICE, SETTLEMENT SYSTEM, AND METHOD**

(30) Priority: 06.10.2023 JP 2023174567
(71) Applicant: Glory Ltd., Hyogo 670-8567 (JP)
(72) Inventor: TANAKA, Kouji, Hyogo, 670-8567 (JP)
(74) Representative: SSM Sandmair

(57) **Abstract**

A reporting system includes: an imaging device 200 configured to capture a target area including a placement section 710 where unregistered items and registered items are placed; determination circuitry configured to determine whether each item placed on the placement section 710 is an unregistered item or a registered item, based on images captured by the imaging device 200; and a display 300 configured to report whether each item placed on the placement section 710 is an unregistered item or a registered item, based on the results of determination by the determination circuitry.

## Description

### BACKGROUND

### Technical Field

The present disclosure relates to a reporting system, a device, a settlement system, and a method.

### Related Art

There are self-checkout systems that allow customers to register and pay for items to be purchased through their own operations. Conventional techniques for this type of self-checkout systems provide a function to check whether items have been registered or not, in order to prevent customers from failing to register items or from illegally skipping the item registration. There is a checkout device including an interface and a processor. The interface obtains images of an imaging range including a placement area where unregistered items are placed. The processor executes registration processing of registering each item taken from the placement area. After the registration processing is finished, the processor outputs an alert if there is still an item in the placement area and, if there is no item in the placement area, processes settlement for the registered items.

In an arrangement where registered items are placed in a different location from unregistered items, separate placement areas for placing unregistered items and for placing registered items are required. This requires enough space to set up the two placement areas at the installation site, and so it may be difficult for small-scale stores to introduce such an arrangement.

It is an object of the present disclosure to provide a reporting system that identifies and reports the registration or non-registration of items in an arrangement where unregistered items and registered items are placed on the same placement area.

### SUMMARY

A first aspect of the present disclosure relates to a reporting system including: an imaging unit configured to capture a target area including a placement area where unregistered items and registered items are placed; determination circuitry configured to determine whether each item placed on the placement area is an unregistered item or a registered item, based on images captured by the imaging unit; and a reporting unit configured to report whether each item placed on the placement area is an unregistered item or a registered item, based on results of determination by the determination circuitry.

In some embodiments, if at least one of items placed on the placement area is removed from the placement area and then returned to the placement area in the images captured by the imaging unit and a predetermined registration determination criterion is satisfied in the images, the determination circuitry may determine that the at least one item returned to the placement area is a registered item.

More specifically, in some embodiments, at least one requirement for satisfaction of the registration determination criterion for an item removed from the placement area may be that, in the images captured by the imaging unit, the item has been subjected to a predetermined operation in an area included in the target area other than the placement area.

In some embodiments, at least one requirement for satisfaction of the registration determination criterion for an item removed from the placement area may be that, in the images captured by the imaging unit, the item and an item returned to the placement area have a certain level of similarity.

In some embodiments, at least on condition that at least one of items placed on the placement area is removed from the placement area and then returned to the placement area in the images captured by the imaging unit and that the determination circuitry receives, from an item registration system for registering items, a registration notification for an item removed from the placement area, the determination circuitry may determine that the at least one item returned to the placement area is a registered item.

In some embodiments, at least on condition that an item removed from the placement area and an item returned to the placement area in the images captured by the imaging unit have a certain level of similarity, the determination circuitry may determine that the item returned to the placement area is a registered item.

In some embodiments, at least on condition that the item for which the registration notification has been issued and an item returned to the placement area in the images captured by the imaging unit have a certain level of similarity, the determination circuitry may determine that the item returned to the placement area is a registered item.

In some embodiments, if a predetermined non-registration determination criterion is satisfied for at least one of items placed on the placement area in the images captured by the imaging unit, the determination circuitry may determine that the at least one item satisfying the non-registration determination criterion is an unregistered item.

More specifically, in some embodiments, a requirement for satisfaction of the non-registration determination criterion for at least one of items placed on the placement area may be that the at least one item is not removed from the placement area in the images captured by the imaging unit.

In some embodiments, a requirement for satisfaction of the non-registration determination criterion for at least one of items placed on the placement area may be that a position of the at least one item is not changed in the images captured by the imaging unit.

In some embodiments, a requirement for satisfaction of the non-registration determination criterion for at least one of items placed on the placement area may be that the at least one item is not touched by hand in the images captured by the imaging unit.

In some embodiments, if at least one of items placed on the placement area is removed from the placement area and then returned to the placement area in the images captured by the imaging unit, the determination circuitry may determine that the at least one item returned to the placement area is a registered item.

In some embodiments, the reporting unit may include a display configured to display at least the placement area included in the target area captured by the imaging unit, and the reporting unit may be configured to cause the display to display items placed on the placement area in a manner that allows for distinguishing between the unregistered items and the registered items.

In some embodiments, the reporting unit may include a projector configured to project different images onto respective items placed on the placement area, depending on whether the items are the unregistered items or the registered items.

In some embodiments, the reporting unit may include a display provided in a placement surface of the placement area, and the reporting unit may be configured to cause the display to display indications in association with respective items placed on the placement area, the indications indicating whether the items are the unregistered items or the registered items.

A second aspect of the present disclosure relates to a device including: image data acquisition circuitry configured to obtain image data, the image data capturing a target area including a placement area where unregistered items and registered items are placed; determination circuitry configured to determine whether each item placed on the placement area is an unregistered item or a registered item, based on the obtained image data; and display control circuitry configured to cause a display to display results of determination by the determination circuitry.

A third aspect of the present disclosure relates to a settlement system including: a registration unit configured to register items by reading a code image on each item; settlement processing circuitry configured to process settlement for items registered by the registration unit; an imaging unit configured to capture a target area including a placement area where unregistered items and registered items are placed; determination circuitry configured to determine whether each item placed on the placement area is an unregistered item or a registered item, based on images captured by the imaging unit and information about items registered by the registration unit; and a reporting unit configured to report whether each item placed on the placement area is an unregistered item or a registered item, based on results of determination by the determination circuitry.

A fourth aspect of the present disclosure relates to a method including: acquiring image data that captures a target area including a placement area where unregistered items and registered items are placed; determining, based on the acquired image data, whether each item placed on the placement area is an unregistered item or a registered item; and outputting results of determination.

Embodiments of the present disclosure can identify and report the registration or non-registration of items in an arrangement where unregistered items and registered items are placed on the same placement area.

### BRIEF DESCRIPTION OF THE DRAWINGS

An exemplary embodiment of the present disclosure will be described in detail with reference to the following figures, wherein:
FIG. 1 illustrates an appearance of a payment system according to an exemplary embodiment;
FIG. 2 illustrates a configuration of the payment system according to the exemplary embodiment;
FIG. 3 illustrates an example hardware configuration of a processing device;
FIGS. 4A through 4C illustrate example images captured by an imaging device when items are registered, where FIG. 4A illustrates a state before the items are registered, FIG. 4B illustrates a state during the item registration operation, and FIG. 4C illustrates a state after the items are registered;
FIGS. 5A and 5B illustrate example display that allows for distinguishing between the items that satisfy a registration determination criterion and those that do not, where FIG. 5A illustrates a first display example and FIG. 5B illustrates a second display example;
FIG. 6 is a flowchart illustrating an operation of the processing device;
FIGS. 7A through 7C illustrate other example images captured by the imaging device when items are registered, where FIG. 7A illustrates a state before the items are registered, FIG. 7B illustrates a state during the item registration operation, and FIG. 7C illustrates a state after the items are registered; and
FIGS. 8A and 8B illustrate other example images captured when items are registered, where FIG. 8A illustrates an image captured by the imaging device, and FIG. 8B illustrates an image captured by a surveillance camera.

### DETAILED DESCRIPTION

An exemplary embodiment of the present disclosure is detailed below with reference to the appended drawings.

### <System configuration>

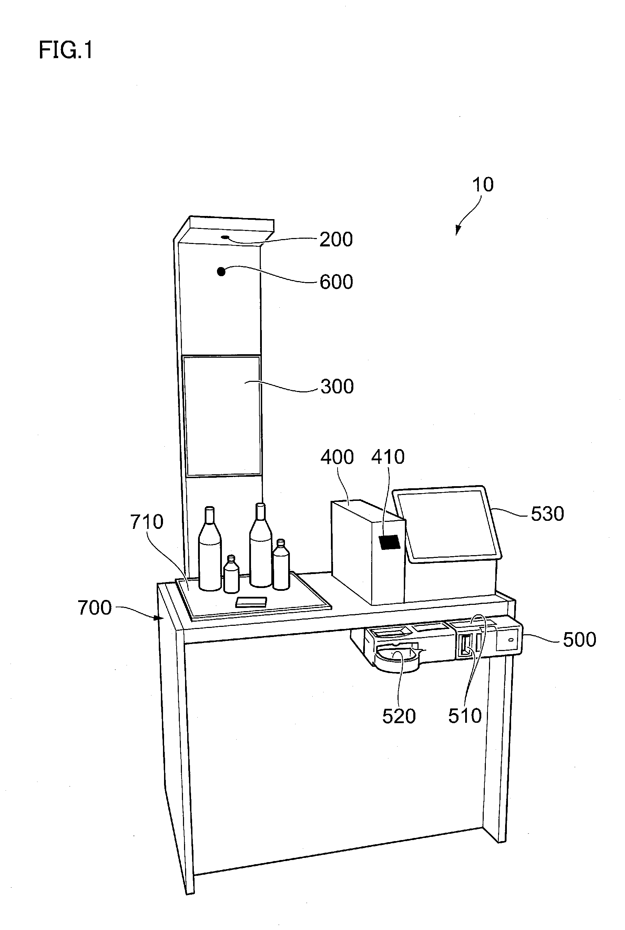

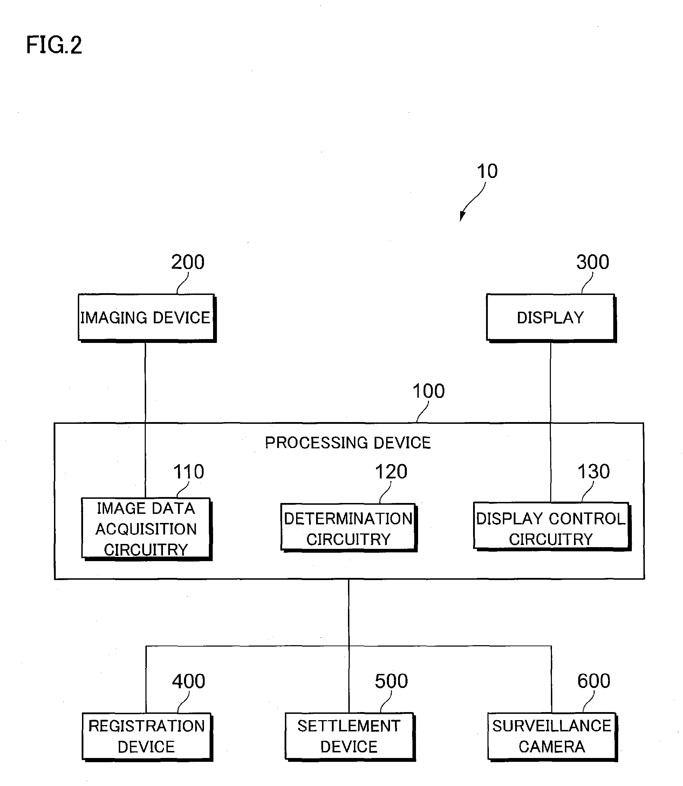

FIG. 1 illustrates an appearance of a payment system according to the present embodiment. FIG. 2 illustrates a configuration of the payment system according to the present embodiment. The payment system of the present embodiment is envisioned to be a system in which a purchaser of items performs operations for registration and settlement of the items himself/herself. However, the present embodiment may also be applied to a system in which not a purchaser, but a clerk performs the operations for registration and settlement of items. The payment system 10 shown in FIGS. 1 and 2 includes a processing device 100, an imaging device 200, a display 300, a registration device 400, a settlement device 500, and a surveillance camera 600.

In the example shown in FIG. 1, these devices constituting the payment system 10 are arranged on a self-checkout counter 700. The self-checkout counter 700 also includes a placement section 710 where items subject to payment processing by the payment system 10 are placed. In the payment system 10, an operation of moving the items placed on the placement section 710 and registering them using the registration device 400 is performed. In the payment system 10 of the present embodiment, the items that have been registered are returned to the same placement section 710. In other words, as the registration of items progresses, there will temporarily be a mixture of registered and unregistered items on the placement section 710. Hence, the payment system 10 of the present embodiment has the processing device 100 analyze images captured by the imaging device 200 to distinguish between the registered and unregistered items and reports to the purchaser. Hereinafter, the side of the self-checkout counter 700 that faces the purchaser when he/she performs operations for registering and paying for items is referred to as the front side.

The processing device 100 performs a determination process regarding the registration of items to be purchased. Specifically, the processing device 100 determines whether each item to be purchased has satisfied a criterion for determining the completion of registration (described below and hereinafter referred to as the "registration determination criterion") and reports to the purchaser of the items whether each item has been registered. The processing device is implemented by, for example, a computer. The processing device 100 is an example of the reporting system. The processing device 100 is not shown in FIG. 1.

As shown in FIG. 2, the processing device 100 includes image data acquisition circuitry 110, determination circuitry 120, and display control circuitry 130. The image data acquisition circuitry 110 obtains images captured by the imaging device 200 and the surveillance camera 600. The determination circuitry 120 analyzes the images obtained by the image data acquisition circuitry 110 to determine whether each item shown in the images has satisfied the registration determination criterion. The display control circuitry 130 causes the display 300 to display the images obtained by the image data acquisition circuitry 110 and the results of determination by the determination circuitry 120.

The imaging device 200 captures a certain imaging range including the placement section 710 and sends the obtained image data to the processing device 100. In response to items being placed on the placement section 710 during the purchase of the items by a purchaser, the items on the placement section 710 are also captured. The imaging device 200 captures a video at least until the items are placed on the placement section 710 and registration of all items is completed. The imaging device 200 is implemented by, for example, a camera. The imaging device 200 is an example of the imaging unit. In the example shown in FIG. 1, the imaging device 200 is disposed at the top of the self-checkout counter 700 so as to capture the imaging range including the placement section 710 from above. However, the position of the imaging device 200 is not limited to the example shown in FIG. 1 and may be disposed at any position at which the imaging device 200 can capture the entire items placed on the placement section 710. For example, the resolution of the imaging device 200 may be, but is not limited to be, good enough to determine the outlines of the items placed on the placement section 710 and to identify the number and positional relationship of the items in the image analysis by the determination circuitry 120 of the processing device 100.

The display 300 displays the images captured by the imaging device 200 and the results of determination by the determination circuitry 120 of the processing device 100. Various modes for displaying the determination results are contemplated. Some specific examples of display modes are described below. The display 300 may also be used as a display means for displaying an operator in a system for remotely responding to questions, etc., from purchasers. The display 300 may also display an operational screen for operating the various devices of the payment system 10. The display 300 is implemented, for example, by a liquid crystal display. The display 300 is an example of the reporting unit. In the example shown in FIG. 1, the display 300 is disposed in an upper portion of the self-checkout counter 700 so as to face the purchaser who stands in front of the placement section 710 to register the items. However, the position of the display 300 is not limited to the example shown in FIG. 1 and may be disposed at any position that makes it easily viewable for the purchaser who is about to register the items.

The registration device 400 performs a process of registering the items sold. The information about the items registered by the registration device 400 is managed by a point of sale (POS) system, for example. The registration device 400 obtains information about an item by, for example, reading a code image (bar code, etc.) attached to the item, and registers the obtained item information with a management system such as a POS system. In the example shown in FIG. 1, a code image reader 410 is provided on the front side of the self-checkout counter 700. The registration device 400 also sends the information about the registered items to the processing device 100. The registration device 400 is implemented by, for example, a POS terminal such as a POS register. The registration device 400 is an example of the registration unit. The registration device 400 is envisioned to be a device operated by the purchaser of the items to register the items himself/herself. Although the item registration system is illustrated as being a POS system, the system is not limited to a POS system and may be any registration system for managing the sale of items.

The settlement device 500 processes deposit and dispensing associated with the sales of items. Specifically, the settlement device 500 receives deposits of money for items and dispenses the necessary change. The settlement device 500 is implemented by, for example, by a cash register. The settlement device 500 is envisioned to be a device operated by the purchaser of items to deposit and dispense money himself/herself (a so-called self-checkout machine). In the example shown in FIG. 1, an inlet 510 and an outlet 520 of the settlement device 500 are provided at the front side of the self-checkout counter 700. Although the settlement device 500 is illustrated as being a device for depositing and dispensing money as shown in FIG. 1, the settlement device 500 is not limited to the illustrated example. For example, the settlement device 500 may be a device exclusive for so-called cashless payment, which does not have the inlet 510 nor the outlet 520 and does not allow the use of cash for payment. For example, the settlement of the items is done by the settlement device 500 in response to receiving a command from the purchaser to execute the settlement process, after the items placed on the placement section 710 have been registered. The command to execute the settlement process is entered by, for example, operating the operational screen displayed on a display 530 of the settlement device 500 or on the display 300.

The surveillance camera 600 captures the purchaser of items and the purchaser's motion. The imaging range of the surveillance camera 600 is such that it can capture the motion made by the purchaser, standing in front of the self-checkout counter 700, to register and pay for the items. The imaging range is an example of the target region. The image capturing by the surveillance camera 600 is done to, for example, prevent fraudulent activities such as skipping the registration of items to be purchased. The images captured by the surveillance camera 600 may be sent to a system for remotely responding to questions, etc. from purchasers, in order to inform the operator of the situations they are in. The images captured by the surveillance camera 600 may be used in combination with the images captured by the imaging device 200 for the determination by the processing device 100.

<Hardware configuration of the processing device 100>

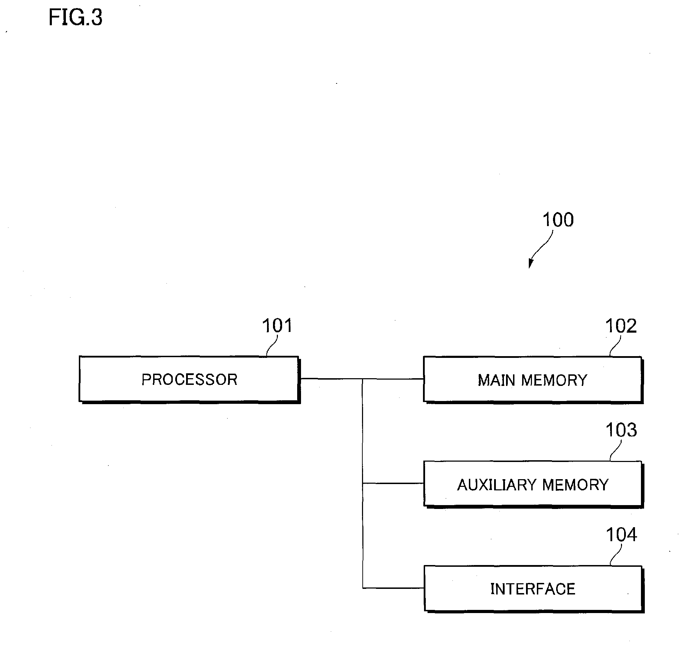

FIG. 3 illustrates an example hardware configuration of the processing device 100. The processing device 100 includes one or more processors 101 as computing means and a main memory 102 and an auxiliary memory 103 as storage means. The processor 101 executes various processes by loading programs stored in the auxiliary memory 103 onto the main memory 102 and running the programs. The processor 101 may be, for example, a central processing unit (CPU), a micro-processing unit (MPU), a graphics processing unit (GPU), a digital signal processor (DSP), etc. The main memory 102 may be, for example, a random access memory (RAM). The auxiliary memory 103 may be, for example, a magnetic disk device, a solid state drive (SSD), etc. The processing device 100 also includes an interface 104 for exchanging data with the imaging device 200, the display 300, the registration device 400, and other devices. The configuration shown in FIG. 3 is merely an example, and the hardware configuration of the processing device 100 is not limited to the example configuration shown in FIG. 3.

### <Examples images captured when items are registered>

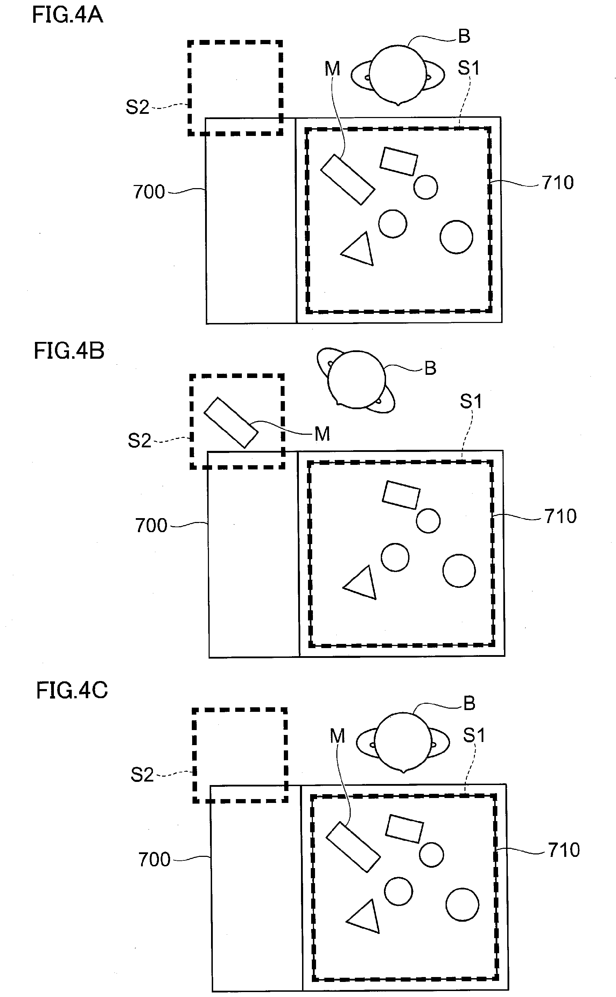

FIGS. 4A through 4C illustrate example images captured by the imaging device 200 when items are registered, where FIG. 4A illustrates a state before the items are registered, FIG. 4B illustrates a state during the item registration operation, and FIG. 4C illustrates a state after the items are registered. In the example shown in FIGS. 4A through 4C, the imaging range of the imaging device 200 includes the placement area S1 of the placement section 710 and the space S2 in front of the registration device 400 and the reader 410. A purchaser B stands in front of the placement section 710 of the self-checkout counter 700 (in FIGS. 4A through 4C, the purchaser B is illustrated above the placement section 710) and performs the following operations for the items.

When registering items, the purchaser B first places all the items to be purchased on the placement section 710. In the example shown in FIG. 4A, six items are placed on the placement area S1. The items placed on the placement area S1 are identified by, for example, analyzing the images captured by the imaging device 200. The degree of identification of the items varies depending on the resolution of the images and the accuracy of the image analysis. In one example, we assume that it is sufficient to be able to recognize the outlines of the items and identify the number and positional relationship of the items placed on the placement area S1, and it is not necessary to identify the type of each item.

Then, the purchaser B moves one item out of the placement area S1 and performs a predetermined operation to satisfy the registration determination criterion. Here, we assume that an item M shown in FIG. 4A is to be moved out of the placement area S1. In the example shown in FIG. 4B, the item M has been moved out of the placement area S1 and located in the space S2 in front of the reader 410. This operation is performed to register the item by having the code image read by the reader 410 of the registration device 400. The movement of the item M from the placement area S1 to the space S2 is recognized by, for example, analyzing the images captured by the imaging device 200.

Then, the purchaser B returns the item M that was moved out of the placement area S1 back into the placement area S1. In the example shown in FIG. 4C, the item M that was moved to the space S2 in FIG. 4B has been moved again and is now located in the placement area S1. The movement of the item M from the space S2 to the placement area S1 is recognized by, for example, analyzing the images captured by the imaging device 200.

The determination circuitry 120 of the processing device 100 analyzes the images captured by the imaging device 200 and, upon recognizing that the above sequence of events has occurred for one item, determines that the item returned to the placement area S1 has satisfied the registration determination criterion. The image analysis by the determination circuitry 120 is assumed to be, for example, accurate enough to determine the outlines of the items placed on the placement section 710 and to identify the number and positional relationship of the items, and is assumed not to be accurate enough to identify the type of each item. In the above example, based on the fact that an item was moved out of the placement area S1 and then returned to the placement area S1 after a specific operation was performed, the item is determined to have satisfied the registration determination criterion. And the specific operation is to move the item temporarily into the space S2. However, the operations based on which the determination circuitry 120 determines that an item has satisfied the registration determination criterion are not limited to the above example. Other example operations to satisfy the registration determination criterion are described below. Upon the above sequence of events having occurred for all the items placed on the placement area S1, the determination circuitry 120 determines that the purchase of the items placed on the placement area S1 by the purchaser B is completed.

By the way, if multiple items are stacked on top of each other on the placement section 710, the analysis may, depending on the images captured by the imaging device 200, recognize them as a single item even though they are multiple items. One contemplated means for detecting a mismatch between the actual number of items placed on the placement section 710 and the number of items obtained through the image analysis will be, for example, to analyze the images before and after the movement of an item that was moved to perform a specific operation to satisfy the registration determination criterion. Specifically, for example, assume that one item is placed at a position before it is moved, and if there is another item at the position after the one item has been moved from the position, it can be detected that multiple items were stacked on top of each other at that position. Alternatively, in an implementation where the settlement device 500 processes the settlement in response to receiving the command from the purchaser after all the items placed on the placement section 710 have been registered, a process of confirming the number of items may be performed after receiving the command from the purchaser and prior to processing the settlement. For example, in the event of a mismatch between the number of items placed on the placement section 710 before they were moved and the number of items returned to the placement section 710, if the number of items before they were moved is smaller, it can be detected that some items were stacked on top of each other before they were moved, and if the number of items returned is smaller, it can be detected that some items are stacked on top of each other after they were returned to the placement section 710. Still alternatively, multiple cameras may be arranged as the imaging devices 200, and images obtained by capturing the placement section 710 from mutually different positions may be compared to more accurately identify individual items and determine whether some items are stacked on top of each other on the placement section 710. Still alternatively, an implementation is possible where the image analysis by the determination circuitry 120 is made accurate enough to identify the type of each item and is used to determine whether some items are stacked on top of each other on the placement section 710.

### <Indications of items satisfying the registration determination criterion>

The display control circuitry 130 of the processing device 100 displays the images captured by the imaging device 200 on the display 300, and also displays the items that satisfy the registration determination criterion, as determined by the determination circuitry 120, in a manner that allows them to be distinguished from other items. Hereinafter, the display of the items that have been determined to satisfy the registration determination criterion in a manner that allows them to be distinguished from those that has been determined not to satisfy that criteria may be referred to as registration indication display. Non-limiting examples of specific manners of display are given below.

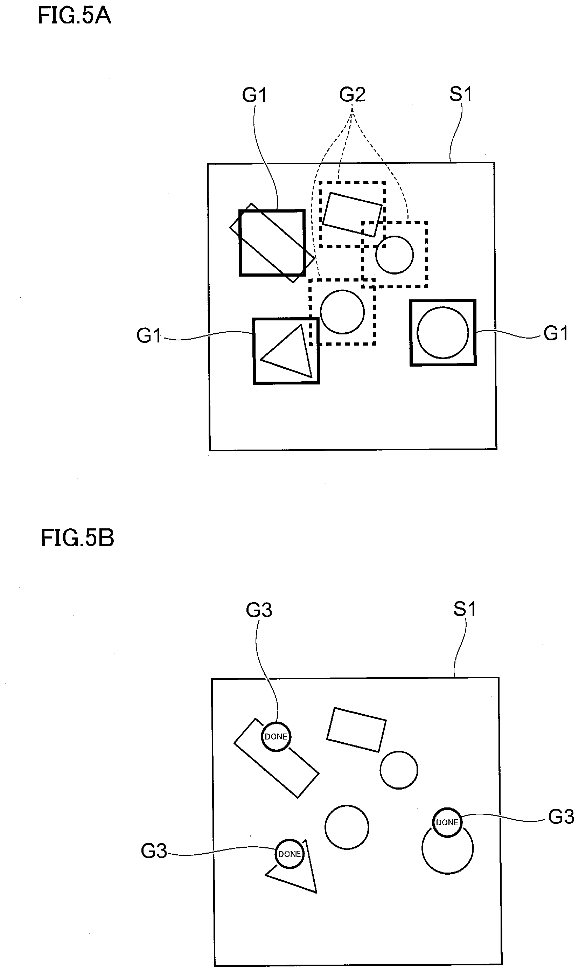

FIGS. 5A and 5B illustrate example display that allows for distinguishing between the items that satisfy the registration determination criterion and those that do not, where FIG. 5A illustrates a first display example and FIG. 5B illustrates a second display example. In the first display example shown in FIG. 5A, each item displayed in the placement area S1 is marked with a border, and the borders are shown in different manners for the items that satisfy the registration determination criterion and those that do not. In the example shown in FIG. 5A, borders G1 for the items that satisfy the registration determination criterion are shown as solid lines, and borders G2 for those that do not satisfy the registration determination criterion are shown as dashed lines. In this case, each solid border G1 is the registration indication display. The manner of display of the borders are not limited to the illustrated example, and the borders may be displayed in any manner that allows for distinguishing between the items that satisfy the registration determination criterion and those that do not. In another example, the color and/or shape of the borders may be varied, or the line thickness and/or density of the borders may be varied.

In the second display example shown in FIG. 5B, an indication indicative of the satisfaction of the registration determination criterion is added to each item that satisfies the registration determination criterion. In the example shown in FIG. 5B, a mark G3 consisting of a circle and the word "done" in it is added to each item satisfying the registration determination criterion. In this case, the mark G3 added to the image of each item is the registration indication display. It should be noted that the manners of display shown in FIGS. 5A and 5B are merely examples. Various manners of display may be used that allow for distinguishing between the items that satisfy the registration determination criterion and those that do not. For example, the items that do not satisfy the registration determination criterion may be displayed in a lighter shade and/or with lower brightness or saturation than those that satisfy the registration determination criterion.

### <Other examples of the registration determination criterion>

The determination circuitry 120 of the processing device 100 determines that an item has satisfied the registration determination criterion if, in the images captured by the imaging device 200, the item has been returned to the placement area S1 after being moved out of the placement area S1 and the predetermined registration determination criterion has been fulfilled for the item. In the above example, the registration determination criterion is that a specific predetermined operation is performed when the item is moved out of the placement area S1, and a specific example of the specific operation is to position the item in the space S2 in front of the reader 410 of the registration device 400. This envisions an operation of having the code image attached to the item read by the reader 410. However, the specific operation is not limited to the operation described above. For example, the specific operation may be to hold a hand-held reader over the item or to temporarily place the item at a specific location.

The registration determination criterion may be based on an event other than the specific operation performed when an item is moved out of the placement area S1. For example, an image before an item is moved out of the placement area S1 and an image after an item is returned to the placement area S1 may be compared to analyze the shape and/or size of the items, and it may be determined that the registration determination criterion is satisfied if the items have a certain level of similarity. The similarity of the items in the images may be calculated using, for example, any existing image analysis technique.

Alternatively, the registration determination criterion may require that an item be registered by the registration device 400. In this case, once the code image of an item is read by the reader 410 and the information about the item is registered, the registration device 400 sends information indicating that the item has been registered (hereinafter referred to as "registration information") to the processing device 100. The determination circuitry 120 of the processing device 100 determines that the registration determination criterion is satisfied if the item is returned to the placement area S1 after being moved out of the placement area S1 and also the determination circuitry 120 receives the registration information from the registration device 400.

In an alternative implementation, in addition to using the above registration information as a requirement of the registration determination criterion, the similarly of items between an image before an item is moved out of the placement area S1 and an image after an item is returned to the placement area S1 may be determined. In this case, the determination circuitry 120 determines that the registration determination criterion is satisfied if it receives the registration information and also the items before and after the movement in the images have a certain level of similarity.

Here, the determination circuitry 120 of the processing device 100 is unable to determine whether an item registered by the registration device 400 and an item returned to the placement area S1 after being moving out of the placement area S1 are identical. Therefore, it is possible that the determination circuitry 120 determines that an item returned to the placement area S1 after being moving out of the placement area S1 satisfies the registration determination criterion even though an item different from that item returned to the placement area S1 has been registered by the registration device 400. Thus, in the case of using the registration information received from the registration device 400 as a requirement of the registration determination criterion, means may be provided for estimating that these items are identical. In one example, the determination circuitry 120 may be configured to determine the similarity between an item temporarily moved to the space S2 in front of the reader 410 of the registration device 400 and an item returned to the placement area S1, in the images captured by the imaging device 200. In this case, the determination circuitry 120 determines that the registration determination criterion is satisfied if it receives the registration information and these items in the images have a certain level of similarity.

<Non-registration determination criterion>

In the above example, the registration determination criterion is set, and items placed on the placement section 710 that satisfy the registration determination criterion are identified. In addition to this, a criterion for determining that an item has not been registered (hereinafter referred to as "non-registration determination criterion") may be set, and items placed on the placement section 710 that satisfy the non-registration determination criterion may be identified. For example, if, in the images captured by the imaging device 200, there is an item in the placement area S1 that has not been moved out of the placement area S1, the determination circuitry 120 may determine that the item satisfies the non-registration determination criterion. In this case, even if the item is moved within the placement area S1, the item still satisfies the non-registration determination criterion.

Alternatively, if, in the images captured by the imaging device 200, there is an item within the placement area S1 whose position within the placement area S1 has not been changed, the determination circuitry 120 may determine that the item satisfies the non-registration determination criterion. In this case, once the item is moved within the placement area S1, the item no longer satisfies the non-registration determination criterion. Still alternatively, if, in the images captured by the imaging device 200, there is an item within the placement area S1 that has not been touched by hand, the determination circuitry 120 may determine that the item satisfies the non-registration determination criterion. In this case, once the item is touched by hand, the item no longer satisfies the non-registration determination criterion even if it is not moved within the placement area S1. The determination of whether the item has been touched by hand may be made using, for example, any existing image analysis technique. In the case of determining whether an item satisfies the non-registration determination criterion, as in the case of determining the satisfaction of the registration determination criterion, the items that have been determined to satisfy the non-registration determination criterion may be displayed on the display 300 in a manner distinguishable from those that are not. Hereinafter, the display of the items that have been determined to satisfy the non-registration determination criterion in a manner that allows them to be distinguished from those that have been determined not to satisfy that criteria may be referred to as non-registration indication display. The dashed borders shown in FIG. 5A may be used as the non-registration indication display.

In the case of setting the non-registration determination criterion separately from the registration determination criterion and separately determining whether each item captured by the imaging device 200 satisfies the registration determination criterion and whether each item captured by the imaging device 200 satisfies the non-registration determination criterion as described above, it is possible, for example, that an item satisfies both the registration determination criterion and the non-registration determination criterion or satisfies neither the registration determination criterion nor the non-registration determination criterion.

If an item satisfies both the registration determination criterion and the non-registration determination criterion, an error may have occurred in at least one of the processes of determining the satisfaction of the registration determination criterion and determining the satisfaction of the non-registration determination criterion. This may help avoid a situation where the settlement process is done on the basis of an incorrect determination as to whether or not items have been registered.

On the other hand, if an item satisfies neither the registration determination criterion nor the non-registration determination criterion, there is a possibility that an unauthorized operation has been done for that item. Examples of such an operation include a purchaser not returning an item to the placement area S1 after moving it out of the placement area S1. In such cases, the purchaser can be notified of the possibility of his/her doing such an unauthorized operation and be prompted to correct the situation.

### <Operation of the processing device 100>

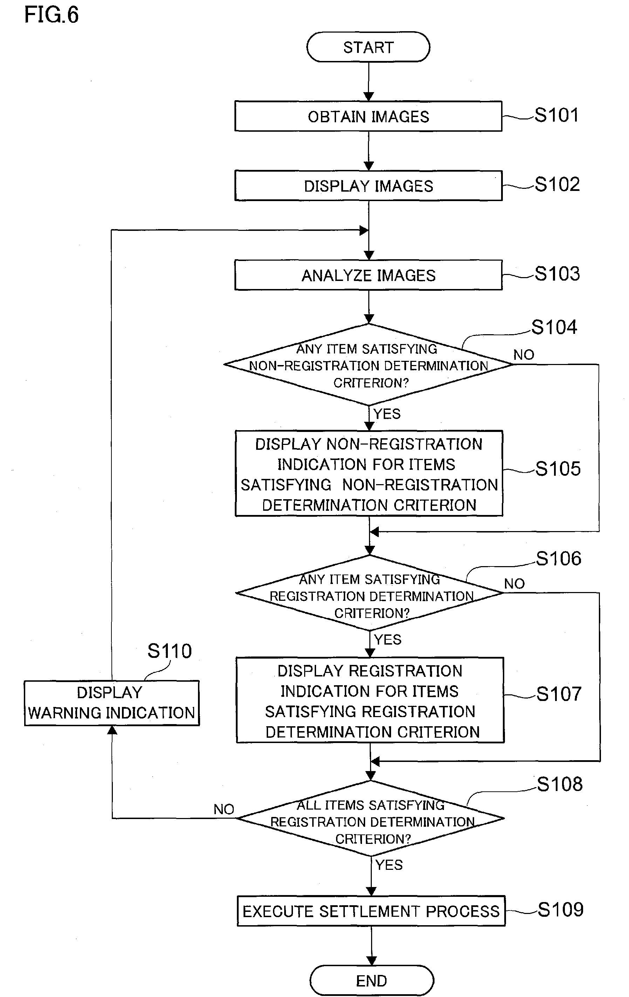

FIG. 6 is a flowchart illustrating an operation of the processing device 100. The premise is that the processing device 100 initiates the processing when a purchaser purchases an item(s). Various events can be contemplated as specific triggers for the initiation of the processing. For example, the processing device 100 may initiate the processing in response to an object(s) being placed on the placement section 710 or in response to accepting an active operation by the purchaser, such as selecting the start button displayed on the display 300.

In response to an event occurring that triggers the initiation of the processing, the image data acquisition circuitry 110 of the processing device 100 obtains images captured by the imaging device 200 (S101). The display control circuitry 130 causes the display 300 to display the images obtained by the image data acquisition circuitry 110 (S102). The determination circuitry 120 analyzes the images obtained by the image data acquisition circuitry 110 (S103).

The determination circuitry 120 checks whether there is any item in the placement area S1 (see FIG. 4) in the images that satisfies the non-registration determination criterion, based on the image analysis results. If there is any item that satisfies the non-registration determination criterion (YES in S104), the non-registration indication display is presented for that item on the display 300 (S105). On the other hand, if there is no item that satisfies the non-registration determination criterion (NO in S104), no non-registration indication display is presented, and processing moves to step S106.

Then, the determination circuitry 120 checks whether there is any item in the placement area S1 in the images that satisfies the registration determination criterion, based on the image analysis results. If there is any item that satisfies the registration determination criterion (YES in S106), the registration indication display is presented for that item on the display 300 (S107). On the other hand, if there is no item that satisfies the registration determination criterion (NO in S106), no registration indication display is presented, and processing moves to step S108.

If there is still any item in the placement area S1 that does not satisfy the registration determination criterion (NO in S108), the display control circuitry 130 of the processing device 100 causes the display 300 to display a warning indication indicating that there is an unregistered item(s) (S110), and processing returns to S103. On the other hand, if it is determined that all items placed on the placement area S1 satisfy the registration determination criterion (YES in S108), the settlement device 500 is commanded to execute the settlement process (S109), and this completes the processing by the processing device 100. After receiving the command from the processing device 100, the settlement device 500 accepts the execution command from the purchaser and executes the settlement process.

### <Variations>

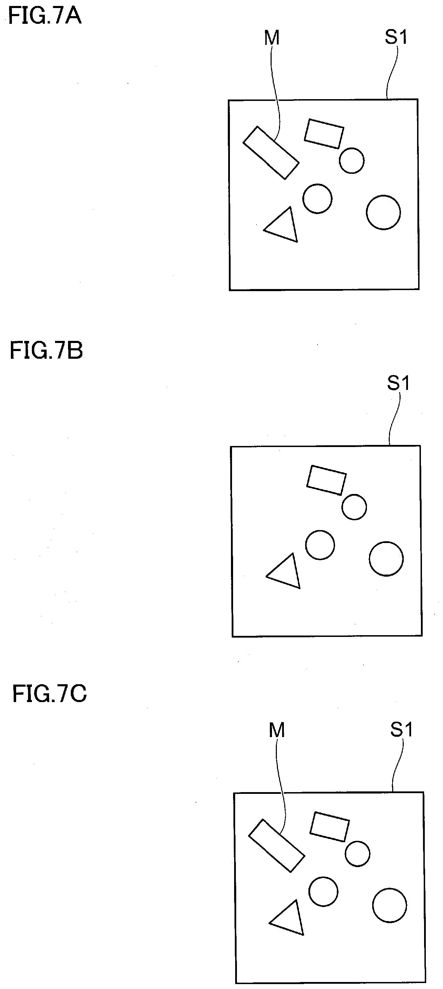

FIGS. 7A through 7C illustrate other example images captured by the imaging device 200 when items are registered, where FIG. 7A illustrates a state before the items are registered, FIG. 7B illustrates a state during the item registration operation, and FIG. 7C illustrates a state after the items are registered. In the example shown in FIGS. 7A through 7C, the imaging range of the imaging device 200 is substantially equal to the placement area S1 of the placement section 710. Thus, unlike the example shown in FIGS. 4A through 4C, the images captured by the imaging device 200 does not include the space in front of the reader 410 of the registration device 400.

When registering items, the purchaser first places all the items to be purchased on the placement section 710. In the example shown in FIG. 7A, six items are placed on the placement area S1. The items placed on the placement area S1 are identified by, for example, analyzing the images captured by the imaging device 200.

Then, the purchaser moves one item out of the placement area S1 and performs a predefined operation to satisfy the registration determination criterion. Here, we assume that an item M shown in FIG. 7A is to be moved out of the placement area S1. Since the imaging range coincides with the placement area S1, the item M moved out of the placement area S1 has disappeared from the images in the example shown in FIG. 7B. The movement of the item M out of the placement area S1 and its disappearance from the images is recognized by, for example, analyzing the images captured by the imaging device 200.

Then, the purchaser returns the item M that was moved out of the placement area S1 back into the placement area S1. In the example shown in FIG. 7C, the item M that was moved out of the placement area S1 in FIG. 7B is now back in the placement area S1 and displayed again. The movement of the item M back into the placement area S1 is recognized by, for example, analyzing the images captured by the imaging device 200.

Regarding the movement of the item M, the example shown in FIGS. 7A through 7C is similar to that shown in FIGS. 4A to 4C. However, since the imaging range of the imaging device 200 coincides with the placement area S1, moving the item M out of the placement area S1 as shown in FIG. 7B results in it disappearing from the images. Thus, even if an operation to satisfy the registration determination criterion is performed while the item M is outside the placement area S1 as described with reference to FIGS. 4A through 4C, the operation cannot be recognized from the images. In such cases, in one example implementation, the determination circuitry 120 of the processing device 100 may determine that the item M has satisfied the registration determination criterion, only on condition that it is moved out of the placement area S1 and disappears from the images and then comes back into the placement area S1.

In order to prevent the determination circuitry 120 from incorrectly determining that the registration determination criterion is satisfied for the item M in cases where an item different from the item M is placed on the placement area S1 after the item M is moved out of the placement area S1, the similarity of the item M between an image before the item M is moved out of the placement area S1 and an image after the item M is returned to the placement area S1 may be factored in for determining the satisfaction of the registration determination criterion. That is, if there is a certain level of similarity between the items before and after the movement, the determination circuitry 120 may determine that the registration determination criterion has been satisfied for the item that has been moved out of the placement area S1 and then returned to the placement area S1.

In a further implementation, the determination circuitry 120 of the processing device 100 may use supplemental information, in addition to the images captured by the imaging device 200, to determine whether an item has satisfied the registration determination criterion. In one example, images captured by the surveillance camera 600 (see FIG. 1) installed in the payment system 10 may also be used.

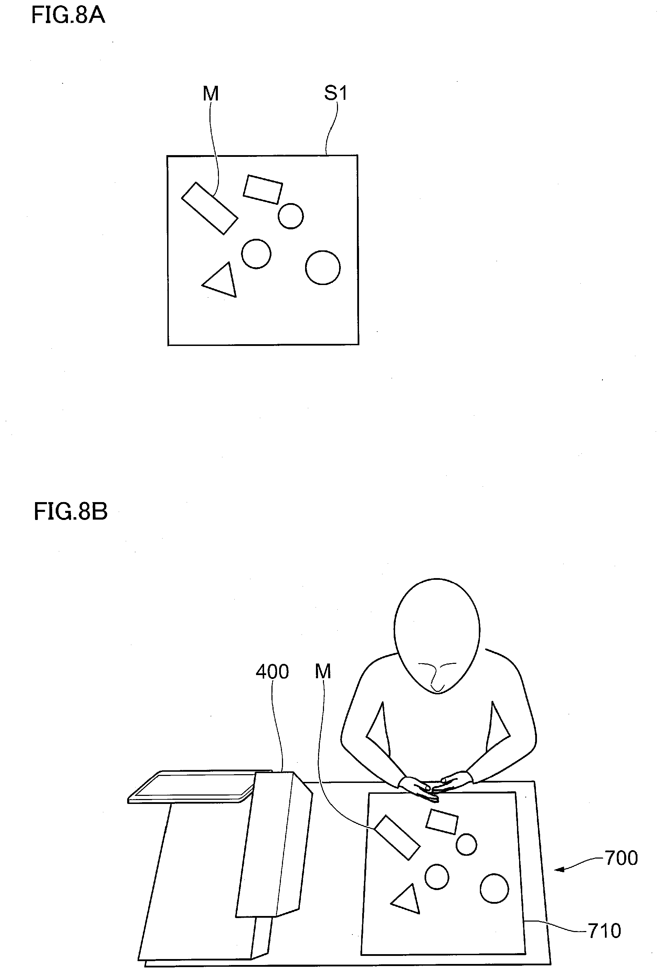

FIGS. 8A and 8B illustrate other example images captured when items are registered, where FIG. 8A illustrates an image captured by the imaging device 200, and FIG. 8B illustrates an image captured by the surveillance camera 600. In the example shown in FIG. 8A, the imaging range of the imaging device 200 is substantially equal to the placement area S1 of the placement section 710. Thus, similarly to the example shown in FIGS. 7A through 7C, the images captured by the imaging device 200 does not include the space in front of the reader 410 of the registration device 400.

As described with reference to FIGS. 7A through 7C, if the imaging range of the imaging device 200 coincides with the placement area S1, moving an item (e.g., item M shown in FIG. 8A) out of the placement area S1 results in it disappearing from the images. And even if an operation to satisfy the registration determination criterion is performed while the item is outside the placement area S1, the operation cannot be recognized from the images captured by the imaging device 200. Hence, images captured by the surveillance camera 600 may be used to compensate for the lack of information.

The surveillance camera 600 captures the motion made by the purchaser, standing in front of the self-checkout counter 700, to register and pay for the items. Thus, the images captured by the surveillance camera 600 includes the placement section 710 of the self-checkout counter 700 and the registration device 400, as shown in FIG. 8B. Analyzing these images makes it possible to detect a sequence of events for one item (e.g., item M), from when it is moved from the placement section 710 to in front of the registration device 400 to when it is returned to the placement section 710. Hence, the determination circuitry 120 of the processing device 100 determines that an operation to satisfy the registration determination criterion for an item has been performed while the item is outside the placement area S1 if an event detected from the images captured by the surveillance camera 600 and the movement of the item out of the placement area S1 and then back into the placement area S1, as recognized by the images captured by the imaging device 200, have occurred concurrently.

### <Variations of the reporting unit>

As described with reference to FIGS. 1 and 2, the payment system 10 includes the display 300 as an example of the reporting unit. The display control circuitry 130 of the processing device 100 controls the display 300 to display images captured by the imaging device 200 as well as registration and non-registration indications indicating the determination results by the determination circuitry 120. The display 300 may be disposed in any manner that makes it easily viewable for the purchaser who is about to register items in the payment system 10, and in the example shown in FIG. 1, it is disposed in an upper portion of the self-checkout counter 700, facing the purchaser standing in front of the placement section 710. Different arrangements for reporting the determination results by the determination circuitry 120 than using the display 300 are also possible.

For example, the placement section 710 of the self-checkout counter 700 may be configured with a display such as a liquid crystal display. The display of this placement section 710 may display images of items corresponding to the items actually placed on the placement section 710, based on the images captured by the imaging device 200. Depending on the determination results by the determination circuitry 120, the registration indication or non-registration indication may be displayed on the image of each item.

In another example, a projector that projects images onto the placement section 710 may be provided. For example, the projector may be provided in an upper portion of the self-checkout counter 700 to project images from above onto the placement section 710. In response to items being placed on the placement section 710, the processing device 100 may identify the positions of the items on the placement section 710 based on the images captured by the imaging device 200, and the projector may project an image of the registration indication or non-registration indication for each item, depending on the determination results by the determination circuitry 120.

Although an exemplary embodiment of the present disclosure has been described above, the technical scope of the present disclosure is not limited to the above embodiment. For example, in the above embodiment, images of the placement section 710 are displayed on the display 300, and the determination results by the determination circuitry 120 of the processing device 100 are presented by means of the registration indications or non-registration indications. In addition to or instead of employing such visual-based reporting, audio-based reporting may be employed. For example, in response to one of the items placed on the placement section 710 being moved from the placement section 710, registered using the registration device 400, and then returned to the placement section 710, the registration of that item may be reported audibly.

In the operation example described with reference to FIG. 6, a warning indication is displayed if there is an unregistered item(s) (S 1 10 in FIG. 6) after initiating the registration of items placed on the placement section 710. In addition to this, the processing device 100 may provide a warning indication for various unauthorized events that may occur during the registration of items. For example, after determining that all items have been registered (Yes in S108), the processing device 100 may count the number of items placed on the placement section 710 using the images captured by the imaging device 200 and also obtain information about the registered items from the registration device 400 to check the number of registered items. And if there is a mismatch between the number of items counted from the images and the number of registered items, the display control circuitry 130 of the processing device 100 may cause the display 300 to display a warning indication to that effect. This can prevent errors due to fraudulent activities or mishandling. Examples of such fraudulent activities and mishandling include cases where a purchaser has apparently performed an action of having the code image of an item read by the reader 410 of the registration device 400 and thus the registration determination criterion has been satisfied in the images but there is still an item(s) that has not been registered, and where there is an item(s) that has been registered without being placed on the placement section 710. If the number of items counted from the images matches the number of registered items, the settlement device 500 executes the settlement process in response to the purchaser's command to execute the settlement process. In another example of displaying a warning indication during an unacceptable event, in response to detecting that some items are stacked on top of each other on the placement section 710, the display control circuitry 130 of the processing device 100 may cause the display 300 to display a warning indication to that effect.

In the above embodiment, the resolution of the images captured by the imaging device 200 and the accuracy of the image analysis by the determination circuitry 120 of processing device 100 are assumed to be good enough to determine the outlines of the items placed on the placement section 710 and to identify the number and positional relationship of the items. However, the resolution of the imaging device 200 and the accuracy of the image analysis by the determination circuitry 120 are not limited to this. For example, the accuracy may be good enough to identify the type or variety of each item. If the resolution of the imaging device 200 and the accuracy of the image analysis by the determination circuitry 120 are good enough to identify the type or variety of each item, and if the processing device 100 detects that some items are stacked on top of each other on the placement section 710 through the image analysis, the display control circuitry 130 of the processing device 100 may cause the display 300 to display a warning indication to that effect as described above. Various other modifications and permutations without departing from the technical concept of the present disclosure are included in aspects of the present disclosure.

The foregoing description of the exemplary embodiment of the present disclosure has been provided for the purposes of illustration and description. It is not intended to be exhaustive or to limit the disclosure to the precise forms disclosed. Obviously, many modifications and variations will be apparent to practitioners skilled in the art without departing from the scope and spirit of the present disclosure. The exemplary embodiment was chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. A reporting system comprising:
an imaging unit configured to capture a target area including a placement area where unregistered items and registered items are placed;
determination circuitry configured to determine whether each item placed on the placement area is an unregistered item or a registered item, based on images captured by the imaging unit; and
a reporting unit configured to report whether each item placed on the placement area is an unregistered item or a registered item, based on results of determination by the determination circuitry.

2. The reporting system according to claim 1, wherein, if at least one of items placed on the placement area is removed from the placement area and then returned to the placement area in the images captured by the imaging unit and a predetermined registration determination criterion is satisfied in the images, the determination circuitry determines that the at least one item returned to the placement area is a registered item.

3. The reporting system according to claim 1 or 2, wherein at least one requirement for satisfaction of the registration determination criterion for an item removed from the placement area is that, in the images captured by the imaging unit, the item has been subjected to a predetermined operation in an area included in the target area other than the placement area.

4. The reporting system according to claim 2 or 3, wherein at least one requirement for satisfaction of the registration determination criterion for an item removed from the placement area is that, in the images captured by the imaging unit, the item and an item returned to the placement area have a certain level of similarity.

5. The reporting system according to any one of claims 1 to 4, wherein, at least on condition that at least one of items placed on the placement area is removed from the placement area and then returned to the placement area in the images captured by the imaging unit and that the determination circuitry receives, from an item registration system for registering items, a registration notification for an item removed from the placement area, the determination circuitry determines that the at least one item returned to the placement area is a registered item.

6. The reporting system according to claim 5, wherein, at least on condition that an item removed from the placement area and an item returned to the placement area in the images captured by the imaging unit have a certain level of similarity, the determination circuitry determines that the item returned to the placement area is a registered item.

7. The reporting system according to claim 5 or 6, wherein, at least on condition that the item for which the registration notification has been issued and an item returned to the placement area in the images captured by the imaging unit have a certain level of similarity, the determination circuitry determines that the item returned to the placement area is a registered item.

8. The reporting system according to any one of claims 1 to 7, wherein, if a predetermined non-registration determination criterion is satisfied for at least one of items placed on the placement area in the images captured by the imaging unit, the determination circuitry determines that the at least one item satisfying the non-registration determination criterion is an unregistered item.

9. The reporting system according to claim 8, wherein a requirement for satisfaction of the non-registration determination criterion for at least one of items placed on the placement area is that the at least one item is not removed from the placement area in the images captured by the imaging unit.

10. The reporting system according to claim 8 or 9, wherein a requirement for satisfaction of the non-registration determination criterion for at least one of items placed on the placement area is that a position of the at least one item is not changed in the images captured by the imaging unit.

11. The reporting system according to any one of claims 1 to 10, wherein, if at least one of items placed on the placement area is removed from the placement area and then returned to the placement area in the images captured by the imaging unit, the determination circuitry determines that the at least one item returned to the placement area is a registered item.

12. The reporting system according to any one of claims 1 to 11, wherein the reporting unit comprises a display configured to display at least the placement area included in the target area captured by the imaging unit, and
the reporting unit is configured to cause the display to display items placed on the placement area in a manner that allows for distinguishing between the unregistered items and the registered items.

13. The reporting system according to any one of claims 1 to 12, wherein the reporting unit comprises a projector configured to project different images onto respective items placed on the placement area, depending on whether the items are the unregistered items or the registered items.

14. The reporting system according to any one of claims 1 to 13, wherein the reporting unit comprises a display provided in a placement surface of the placement area, and
the reporting unit is configured to cause the display to display indications in association with respective items placed on the placement area, the indications indicating whether the items are the unregistered items or the registered items.

15. A method comprising:
acquiring image data that captures a target area including a placement area where unregistered items and registered items are placed;
determining, based on the acquired image data, whether each item placed on the placement area is an unregistered item or a registered item; and
outputting results of determination.
